# EUROPEAN PATENT APPLICATION

(11) **EP 3 451 188 A1**
(43) Date of publication of application: **06.03.2019**
(21) Application number: 17788964.9
(22) Date of filing: 20.01.2017
(51) Int. Cl.: G06F 17/28, G10L 13/00, G10L 15/00

(54) **INFORMATION PROCESSING DEVICE, INFORMATION PROCESSING SYSTEM, AND PROGRAM**

(30) Priority: 27.04.2016 JP 2016089262
(71) Applicant: Sony Corporation, Tokyo 108-0075 (JP)
(72) Inventor: FUKAZAWA, Ryo, Tokyo 108-0075 (JP); KAWANO, Shinichi, Tokyo 108-0075 (JP); SATO, Daisuke, Tokyo 108-0075 (JP); NAMAE, Takuya, Tokyo 108-0075 (JP); SUGIHARA, Kenji, Tokyo 108-0075 (JP)
(74) Representative: MFG Patentanwälte Meyer-Wildhagen Meggle-Freund Gerhard PartG mbB
(86) International application number: PCT/JP2017/001912
(87) International publication number: WO 2017/187674

(57) **Abstract**

[Object] To provide an information processing device, information processing system, and program that are capable of encouraging smoother conversations.

[Solution] The information processing device includes: an acquisition unit configured to acquire situation information including information regarding a situation related to translation output; and a notification information generation unit configured to generate notification information on a basis of the situation information.

## Description

### Technical Field

The present disclosure relates to an information processing device, an information processing system, and a program.

### Background Art

For example, an automatic translation technology is used for communication between users who use different languages. For example, Patent Literature 1 discloses a technology of recognizing spoken voice, translating it into another language, and outputting a result of the translation as synthesized speech.

### Citation List

### Patent Literature

Patent Literature 1: JP 2001-101187A

### Disclosure of Invention

### Technical Problem

However, the communication using the automatic translation technology includes a time lag (time difference) between when a speaker speaks and when a listener receives a result of translation of contents of the speech output in another language. In addition, the speaker does not know a situation related to output of the translation such as whether the listener has received the result of translation. Therefore, sometimes it is difficult to encourage a smooth conversation.

Accordingly, the present disclosure proposes a novel and improved information processing device, information processing system, and program that are capable of encouraging smoother conversations.

### Solution to Problem

According to the present disclosure, there is provided an information processing device including: an acquisition unit configured to acquire situation information including information regarding a situation related to translation output; and a notification information generation unit configured to generate notification information on a basis of the situation information.

In addition, according to the present disclosure, there is provided an information processing system including: an acquisition unit configured to acquire situation information including information regarding a situation related to translation output; and a notification information generation unit configured to generate notification information on a basis of the situation information.

In addition, according to the present disclosure, there is provided a program causing a computer to achieve: a function of acquiring situation information including information regarding a situation related to translation output; and a function of generating notification information on a basis of the situation information.

### Advantageous Effects of Invention

As described above, according to the present disclosure, it is possible to encourage smoother conversations.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is an explanatory diagram illustrating an overview of a translation system according to an embodiment of the present disclosure.
[FIG. 2] FIG. 2 is a block diagram illustrating a configuration example of a speaker-side terminal 1 according to the embodiment.
[FIG. 3] FIG. 3 is a block diagram illustrating a configuration example of a listener-side terminal 2 according to the embodiment.
[FIG. 4] FIG. 4 is a sequence diagram illustrating an example of a workflow of a process according to the embodiment.
[FIG. 5] FIG. 5 is an explanatory diagram illustrating another example of a notification according to the embodiment.
[FIG. 6] FIG. 6 is an explanatory diagram illustrating another example of a notification according to the embodiment.
[FIG. 7] FIG. 7 is an explanatory diagram illustrating an example of a notification screen showing a progression rate.
[FIG. 8] FIG. 8 is an explanatory diagram illustrating an example in which a result of translation is output to a speaker.
[FIG. 9] FIG. 9 is an explanatory diagram illustrating an example in which a result of retranslation is output to a speaker.
[FIG. 10] FIG. 10 is an explanatory diagram illustrating display output using an AR technology according to a modified embodiment.
[FIG. 11] FIG. 11 is a table showing an example of types of weight and words with enhanced weight according to a modified embodiment.
[FIG. 12] FIG. 12 is a table showing types of weight enhanced in accordance with schedule contents of according to a modified embodiment.
[FIG. 13] FIG. 13 is a table showing types of weight enhanced in accordance with behavior according to a modified embodiment.
[FIG. 14] FIG. 14 is a block diagram illustrating a configuration example of a listener-side terminal 2-2 in the case where a speaker does not have a terminal.
[FIG. 15] FIG. 15 is an explanatory diagram illustrating a hardware configuration example.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that, the description is given in the following order.
<<1. Overview>>
<<2. Configuration example>>
   <2-1. Speaker-side terminal>
   <2-2. Listener-side terminal>
   <2-3. Supplement>
<<3. Operation example>>
   <3-1. Workflow ofprocess>
   <3-2. Variation of notification>
<<4. Modified embodiments>>
   <4-1. Modified embodiment 1>
   <4-2. Modified embodiment 2>
   <4-3. Modified embodiment 3>
   <4-4. Modified embodiment 4>
   <4-5. Modified embodiment 4>
<<5. Hardware configuration example>>
<<6. Conclusion>>

### <<1. Overview>>

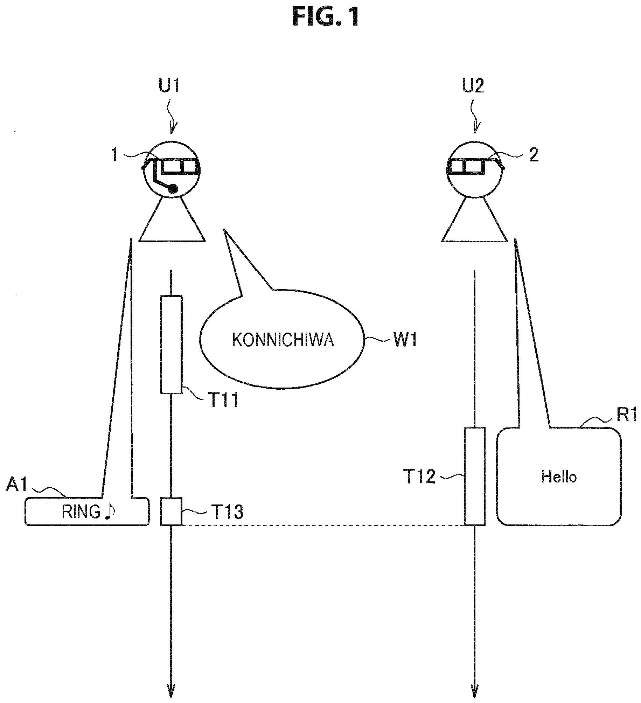

First, with reference to FIG. 1, an overview of an embodiment of the present disclosure will be described. A translation system (information processing system) according to the present embodiment is capable of encouraging smoother conversations, for example, by issuing a notification based on a translation output situation to a speaker who has spoken.

FIG. 1 is an explanatory diagram illustrating an overview of the translation system according to an embodiment of the present disclosure. The translation system according to the present embodiment is an information processing system including a speaker-side terminal 1 and a listener-side terminal 2. A speaker U1 and a listener U2 illustrated in FIG. 1 are users who use different languages from each other. In addition, as illustrated in FIG. 1, the speaker U1 wears the speaker-side terminal 1, and the listener U2 wears the listener-side terminal 2.

For example, the translation system according to the present embodiment translates a speech from the speaker U1 into a language used by the listener U2, and outputs a result of the translation (performs translation output). In the example illustrated in FIG. 1, the speaker-side terminal 1 collects voice of a speech W1 made by the speaker U1 during a time period T11, a translation process is performed on the speech W1, and then the listener-side terminal 2 performs translation output R1 by voice during a time period T12.

In addition, the speaker-side terminal 1 outputs a notification to the speaker U1 in accordance with a situation of the translation output performed by the listener-side terminal 2. In the example illustrated in FIG. 1, the speaker-side terminal 1 outputs sound of a notification A1 (alert sound) during a time period T13 that is substantially the same timing as the end of the translation output R1 (the end of the time period T12). The notification A1 indicates the end of the translation output R1.

Note that, in the example illustrated in FIG. 1, the example in which the sound of the notification A1 and the translation output R1 are output has been described. However, the present technology is not limited thereto. For example, the notification A1 and the translation output R1 may be output and displayed on display units of the speaker-side terminal 1 and the listener-side terminal 2 by using icons, dialogues, or the like. In addition, the notification A1 may be output through a vibration function of the speaker-side terminal 1.

In addition, FIG. 1 illustrates the example in which the speaker-side terminal 1 and the listener-side terminal 2 are glasses-type devices. However, the present technology is not limited thereto. The speaker-side terminal 1 and the listener-side terminal 2 may be implemented by various kinds of information processing devices. For example, the speaker-side terminal 1 and the listener-side terminal 2 may be mobile phones, smartphones, hearing aids, tablet personal computers (PCs), collar type devices, headsets, or the like.

As described above, when using the translation system according to the embodiment of the present disclosure, the speaker-side terminal 1 outputs notification to the speaker U1 on the basis of a situation of translation output. Therefore, it is possible for the speaker U1 to recognize the situation related to translation output and encourage smoother conversations. Next, details of the configurations according to the present embodiment having such effects will be described.

<<2. Configuration example>>

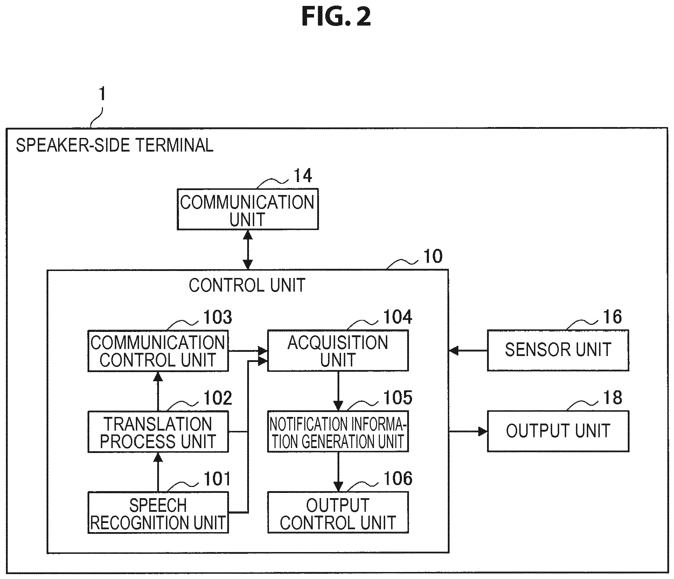

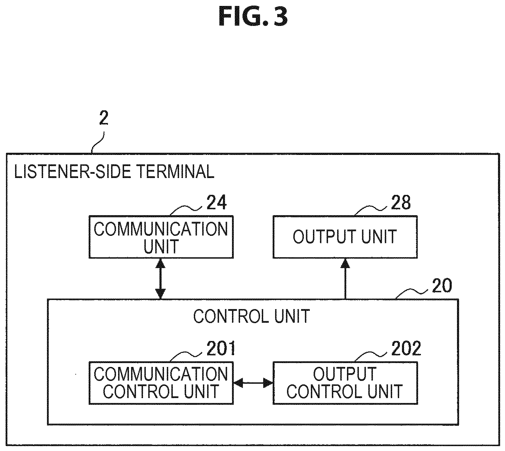

The overview of the translation system according to the embodiment of the present disclosure has been described above. Next, with reference to FIG. 2 and FIG. 3, configuration examples of the speaker-side terminal 1 and the listener-side terminal 2 in the translation system according to the present embodiment will be described in this order.

### <2-1. Speaker-side terminal>

FIG. 2 is a block diagram illustrating a configuration example of the speaker-side terminal 1 according to the present embodiment. As illustrated in FIG. 2, the speaker-side terminal 1 is an information processing device including a control unit 10, a communication unit 14, a sensor unit 16, and an output unit 18.

The control unit 10 controls respective structural elements of the speaker-side terminal 1. In addition, as illustrated in FIG. 2, the control unit 10 also functions as a speech recognition unit 101, a translation process unit 102, a communication control unit 103, an acquisition unit 104, a notification information generation unit 105, and an output control unit 106.

The speech recognition unit 101 recognizes a speech (voice) from a user collected by a microphone included in the sensor unit 16 (to be described later), converts the speech into a character string, and acquires a speech text. Note that, it is also possible for the speech recognition unit 101 to identify a person who is speaking on the basis of features of the voice, and to estimate a direction of a source of the voice. In addition, it is also possible for the speech recognition unit 101 to determine whether a user is speaking.

In addition, it is also possible for the speech recognition unit 101 to provide the acquisition unit 104 with information regarding a situation related to speech recognition (for example, whether the speech recognition is currently performed, a progress situation of speech recognition, ending time, or the like).

The translation process unit 102 performs a translation process for translating a speech text acquired by the speech recognition unit 101 into a translation destination language (such as a language used by a listener who is a user of the listener-side terminal 2). Note that, for example, the translation destination language related to the translation process performed by the translation process unit 102 may be acquired from the listener-side terminal 2 via the communication unit 14, may be manually set by a user, or may be set in advance.

In addition, it is also possible for the translation process unit 102 to provide the acquisition unit 104 with information regarding a situation related to a translation process (for example, whether the translation process is currently performed, a progress situation of the translation process, ending time, or the like).

The communication control unit 103 controls communication through the communication unit 14. For example, the communication control unit 103 may control the communication unit 14 such that information regarding a result of translation done by the translation process unit 102 (translation result information) is transmitted to the listener-side terminal 2. In addition, the communication control unit 103 may control the communication unit 14 such that information regarding a situation related to translation output (an example of situation information) is received from the listener-side terminal 2.

The acquisition unit 104 acquires situation information indicating a current situation. For example, the situation information acquired by the acquisition unit 104 may include information regarding a situation related to translation output performed by the listener-side terminal 2. The information is received via the communication unit 14.

In addition, the situation information acquired by the acquisition unit 104 may further include information regarding a situation related to speech recognition provided by the speech recognition unit 101, or information regarding a situation related to a translation process provided by the translation process unit 102. In accordance with such a configuration, for example, it is possible to notify of a detailed situation related to a translation as described later, and it is possible for a speaker to recognize a detailed situation related to translation of his/her own speech.

The notification information generation unit 105 generates notification information for notifying the user (speaker) of the speaker-side terminal 1, on the basis of situation information acquired by the acquisition unit 104. For example, the notification information generated by the notification information generation unit 105 may include information regarding a notification method (alert sound output, display output, or the like), a time or time period in which notification is output, and the like.

In addition, for example, the notification information generated by the notification information generation unit 105 may include information indicating an ending time of translation output performed by the listener-side terminal 2. In addition, for example, the notification information generated by the notification information generation unit 105 may include information for notifying of the end of translation output performed by the listener-side terminal 2. In accordance with the above described configuration, it is possible for the speaker to recognize the end of translation output related to his/her own speech. For example, it is possible to utilize the recognition for determining whether to continue speaking, or the like.

In addition, for example, the notification information generated by the notification information generation unit 105 may include information indicating a progression rate. For example, the progression rate may be a progression rate related to translation output, or may be a progression rate related to a process including a translation process, a speech recognition process, or the like in addition to the translation output. In accordance with such a configuration, for example, it is possible to notify of a detailed situation related to translation as described later, and it is possible for a speaker to recognize a detailed situation related to translation of his/her own speech.

The output control unit 106 controls output from the output unit 18. The output control unit 106 according to the present embodiment controls the output unit 18 such that the output unit 18 outputs a notification to the user (speaker) on the basis of notification information generated by the notification information generation unit 105.

For example, as described with reference to FIG. 1, the output control unit 106 may cause a notification to be output, the notification indicating the end of translation output performed by the listener-side terminal 2. In accordance with such a configuration, it is possible for the speaker to recognize the end of translation output related to his/her own speech. For example, it is possible to utilize the recognition for determining whether to continue speaking, or the like.

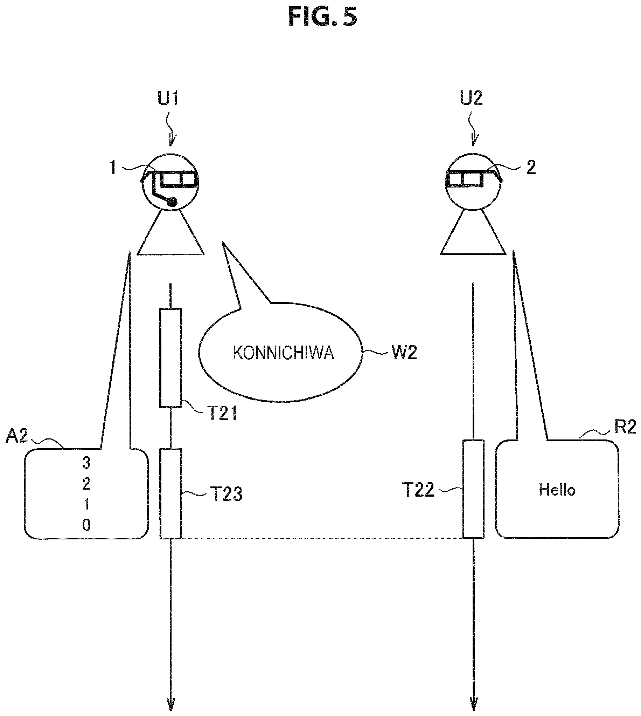

In addition, the output control unit 106 may cause a notification to be output, the notification indicating remaining time before the translation output performed by the listener-side terminal 2 ends. In accordance with such a configuration, it is possible for a speaker to recognize a detailed situation related to translation of his/her own speech. Note that, an example of such a notification will be described later with reference to FIG. 5.

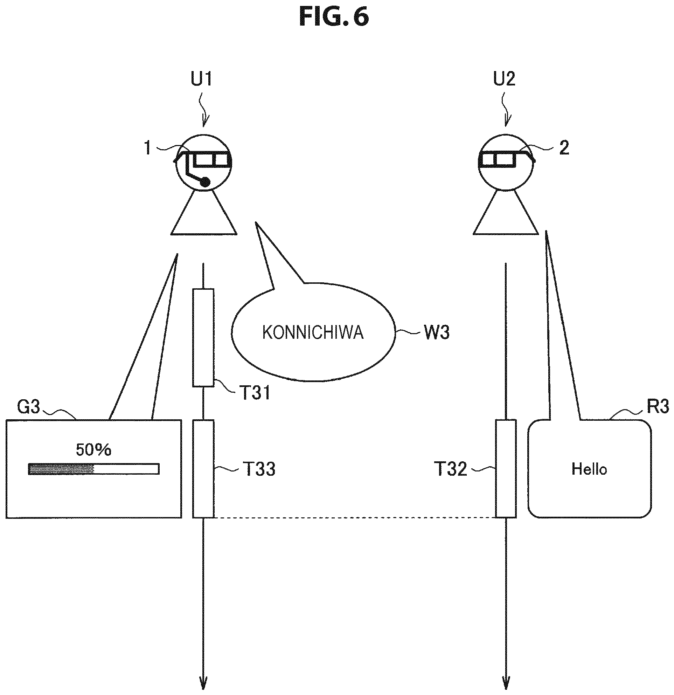

In addition, the output control unit 106 may cause a notification to be output, the notification indicating a progression rate. In accordance with such a configuration, it is possible for a speaker to recognize a detailed situation related to translation of his/her own speech. Note that, an example of such a notification will be described later with reference to FIG. 6.

The communication unit 14 is a communication interface configured to mediate communication with other devices. The communication unit 14 supports any wireless or wired communication protocol, and establishes communication connection with other devices via a communication network (not illustrated), for example. This enables the speaker-side terminal 1 to transmit translation result information to the listener-side terminal 2, and receive information regarding a situation related to the translation output from the listener-side terminal 2, for example.

The sensor unit 16 is a sensor device configured to sense information regarding a vicinity of the speaker-side terminal 1. For example, the sensor unit 16 may include one or a plurality of microphones configured to collect ambient sound. In addition, the sensor unit 16 may include a camera configured to acquire images, a distance sensor, a motion detector, a biological information sensor, an acceleration sensor, a gyro sensor, and the like.

The output unit 18 outputs a notification to the user (speaker) of the speaker-side terminal 1 under the control of the output control unit 106. For example, the output unit 18 may include a speaker capable of outputting sound, a display and a projector that are capable of outputting display, a light emitting device (such as an LED) capable of outputting light, a vibration device capable of outputting vibration, or the like.

### <2-2. Listener-side terminal>

The configuration example of the speaker-side terminal 1 according to the present embodiment has been described above. Next, a configuration example of the listener-side terminal 2 according to the present embodiment will be described. FIG. 3 is a block diagram illustrating a configuration example of the listener-side terminal 2 according to the present embodiment. As illustrated in FIG. 3, the listener-side terminal 2 is an information processing device including a control unit 20, a communication unit 24, and an output unit 28.

The control unit 20 controls respective structural elements of the listener-side terminal 2. In addition, as illustrated in FIG. 3, the control unit 20 also functions as a communication control unit 201 and an output control unit 202.

The communication control unit 201 controls communication performed by the communication unit 24. For example, the communication control unit 201 may control the communication unit 24 such that translation result information is received from the speaker-side terminal 1. In addition, the communication control unit 201 may control the communication unit 24 such that information regarding a situation related to translation output (an example of situation information) is transmitted to the speaker-side terminal 1.

The output control unit 202 controls output from the output unit 28. The output control unit 202 according to the present embodiment controls the output unit 28 such that the output unit 28 outputs a translation result (performs translation output) on the basis of translation result information received from the speaker-side terminal 1. For example, the output control unit 202 may cause the translation result to be displayed and output as a text, or may cause the translation result to be output by voice in the form of synthesized voice.

In addition, the output control unit 202 provides the communication control unit 201 with information indicating a situation of translation output performed by the output unit 28 (for example, whether the translation output is currently performed, a progress situation of the translation process, ending time, or the like).

The communication unit 24 is a communication interface configured to mediate communication with other devices. The communication unit 24 supports any wireless or wired communication protocol, and establishes communication connection with other devices via a communication network (not illustrated), for example. This enables the listener-side terminal 2 to transmit information regarding a situation related to translation output (an example of situation information) to the speaker-side terminal 1, and receive translation result information from the listener-side terminal 2, for example.

The output unit 28 outputs a translation result to the user (listener) of the listener-side terminal 2 under the control of the output control unit 202. For example, the output unit 18 may include a speaker capable of outputting sound, a display and a projector that are capable of outputting display, a light emitting device (such as an LED) capable of outputting light, or the like.

### <2-3. Supplement>

The configuration examples of the speaker-side terminal 1 and the listener-side terminal 2 in the translation system according to the present embodiment have been described above. However, the above-described configurations are mere examples. The present embodiment is not limited thereto.

For example, the listener-side terminal 2 may have respective functions of the control unit 10. In addition, the speaker-side terminal 1 may have respective functions of the control unit 20. For example, the listener-side terminal 2 may include the function of the speech recognition unit 101 or the translation process unit 102. In addition, another information processing device connected via the communication unit 14 or the communication unit 24 may have respective functions of the control unit 10 and the control unit 20. For example, it is possible for a server (not illustrated) that is an example of the information processing device to have the functions of the speech recognition unit 101, the translation process unit 102, the acquisition unit 104, and the notification information generation unit 105, and the speaker-side terminal 1 may be provided with notification information generated by the server.

In addition, the translation system according to the present embodiment may include a plurality of user terminals (information processing devices) each of which has both the functions of the speaker-side terminal 1 and the functions of the listener-side terminal 2. In this case, two users wear the respective user terminals. Accordingly, two-way conversations may be encouraged by the translation system according to the present embodiment. In accordance with the above described configuration, it is possible for users participating in the conversation to speak while recognizing situations of translation output to each other. This enables smoother two-way conversations.

### <<3. Operation example>>

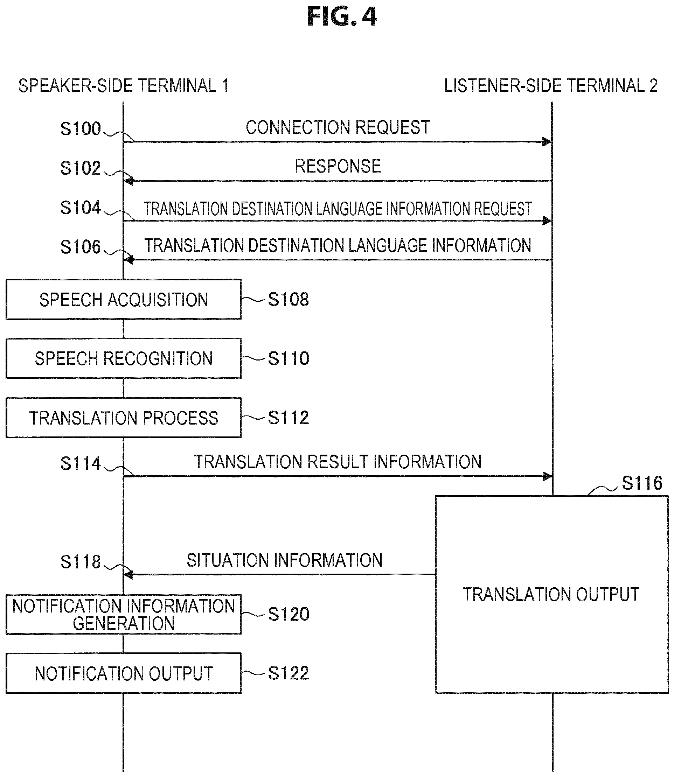

Next, with reference to FIG. 4 to FIG. 7, an operation example according to the present embodiment will be described. First, with reference to FIG. 4, a workflow of a process according to the present embodiment will be described. Next, with reference to FIG. 5 to FIG. 7, examples of a notification to be output according to the present embodiment will be described.

### <3-1. Workflow ofprocess>

FIG. 4 is a sequence diagram illustrating an example of a workflow of a process according to the present embodiment. As illustrated in FIG. 4, first, connection is established between the speaker-side terminal 1 and the listener-side terminal 2 (S100 and S102). Next, the speaker-side terminal 1 requests information regarding a translation destination language from the listener-side terminal 2 (S104), and the listener-side terminal 2 transmits the information regarding the translation destination language to the speaker-side terminal 1 (S106).

Next, the sensor unit 16 of the speaker-side terminal 1 acquires a speech (voice) from a user (speaker) of the speaker-side terminal 1 (S108). Subsequently, the speech recognition unit 101 of the speaker-side terminal 1 recognizes the speech, converts it into a character string, and acquires a speech text (S110). Next, the translation process unit 102 translates the speech text into the translation destination language (S112).

Information regarding a result of the translation done by the translation process unit 102 is transmitted from the speaker-side terminal 1 to the listener-side terminal 2 (S114). The listener-side terminal 2 that has received the information regarding the result of translation outputs the result of translation (performs translation output) (S116).

Here, the listener-side terminal 2 transmits information regarding a situation related to the translation output to the speaker-side terminal 1 (an example of situation information) (S118) while performing the translation output in Step S116. Note that, FIG. 4 illustrates one-time transmission of the information regarding the situation related to translation output. However, it is also possible to transmit the information multiple times while performing translation output.

Next, the notification information generation unit 105 of the speaker-side terminal 1 generates notification information for notifying the user (speaker) of the speaker-side terminal 1, on the basis of the situation information acquired by the acquisition unit 104 (S120). Next, the output control unit 106 of the speaker-side terminal 1 controls the output unit 18 such that the output unit 18 outputs a notification on the basis of the notification information (S122).

The example of the workflow of the process according to the present embodiment has been described above. However, the above-described example is a mere example. The workflow of the process according to the present embodiment is not limited thereto. For example, the speech acquisition (S108), the speech recognition (S110), and the translation process (S112) may be performed in parallel. For example, speeches may be sequentially subjected to the speech recognition and the translation process in order of acquisition while a user is speaking.

In addition, as described above, the present embodiment may be implemented by various configurations. Therefore, the workflow of the process may vary in accordance with the configurations. For example, in the case where the listener-side terminal 2 has the functions of the speech recognition unit 101 and the translation process unit 102, the processes in Step S110 and the Step S112 may be performed by the listener-side terminal 2.

### <3-2. Variation of notification>

Next, variation of the notification according to the present embodiment will be described. The translation system according to the present embodiment is not limited to the example described with reference to FIG. 1. The translation system according to the present embodiment may output various notifications. Hereinafter, with reference to FIG. 5 to FIG. 7, other examples of the notification according to the present embodiment will be described. Note that, for example, notifications to be described below may vary in accordance with notification information generated by the notification information generation unit 105.

### (Notification example 1)

FIG. 5 is an explanatory diagram illustrating another example of the notification according to the present embodiment. In the example illustrated in FIG. 5, the speaker-side terminal 1 collects voice of a speech W2 from the speaker U1 during a time period T21, a translation process is performed on the speech W2, and then the listener-side terminal 2 performs translation output R2 by voice during a time period T22.

In addition, in the example illustrated in FIG. 5, the speaker-side terminal 1 outputs a notification to the speaker U1 in accordance with a situation of the translation output performed by the listener-side terminal 2. The notification indicates remaining time before the translation output ends. In the example illustrated in FIG. 5, the speaker-side terminal 1 outputs sound of a notification A2 during a time period T23. The notification A2 indicates remaining time before the translation output R2 ends (before the time period T22 ends). In accordance with such a configuration, it is possible for the speaker U1 to recognize a detailed situation related to translation output regarding his/her own speeches.

### (Notification example 2)

FIG. 6 is an explanatory diagram illustrating another example of the notification according to the present embodiment. A time period T31, a speech W3, a time period T32, and translation output R3 that are illustrated in FIG. 6 are similar to the time period T21, the speech W2, the time period T22, and the translation output R2 that have been described with reference to FIG. 5. Accordingly, repeated description thereof will be omitted.

In the example illustrated in FIG. 6, the output control unit 106 causes a notification to be output, the notification indicating a progression rate. In the example illustrated in FIG. 6, the notification (notification screen G3) indicating a progression rate related to translation output is output and displayed on the speaker-side terminal 1 during a time period T33 that is a time period corresponding to the time period T32 (for example, the time period T33 is the same time period as the time period T32). In accordance with such a configuration, it is possible for the speaker to recognize a detailed situation related to translation output regarding his/her own speeches.

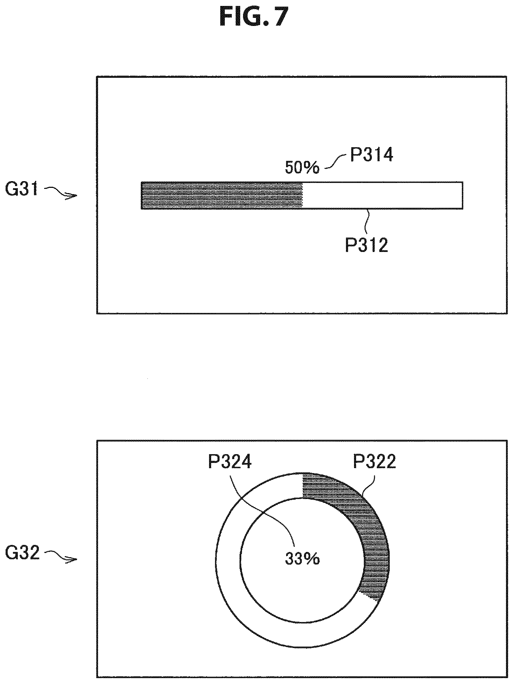

FIG. 7 is an explanatory diagram illustrating an example of the notification screen showing the progression rate to be displayed on the speaker-side terminal 1. Like a notification screen G31 illustrated in FIG. 7, the notification screen showing a progression rate may include a rod-like progress bar P312 indicating the progression rate, or a text P314 indicating the progression rate. Alternatively, like a notification screen G32 illustrated in FIG. 7, the notification screen showing a progression rate may include a circular progress bar P322 indicating the progression rate, or a text P324 indicating the progression rate.

Note that, the notification screen that shows a progression rate and that is displayed on the speaker-side terminal 1 is not limited to the examples illustrated in FIG. 6 and FIG. 7. Various kinds of notification screens can be used.

In addition, the notification indicating a progression rate may be output by voice. For example, a numerical value of a progression rate may be output by using synthesized voice, or the notification indicating a progression rate may be output such that outputting beeping sound gradually gets louder.

### <<4. Modified embodiments>>

The embodiment of the present disclosure has been described above. Next, some modified embodiments according to the present disclosure will be described. Note that, the modified embodiments to be described below may be separately applied to the embodiment according to the present disclosure, or may be applied to the embodiment according to the present disclosure in combination. Note that, the modified embodiments may be applied instead of the configuration described in the embodiment according to the present disclosure, or may be applied in addition to the configuration described in the embodiment according to the present disclosure.

### <4-1. Modified embodiment 1>

The example in which a notification based on a situation related to translation output is output to a speaker has been described above. However, the present technology is not limited thereto. For example, a result of translation may be output to the speaker instead of or in addition to the notification based on the situation related to the translation output.

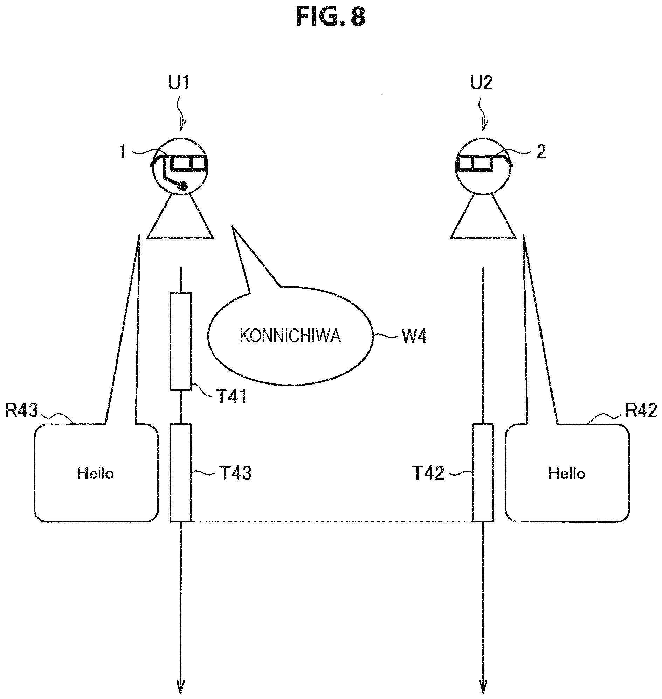

FIG. 8 is an explanatory diagram illustrating an example in which a result of translation is output not only to a listener but also to a speaker. A time period T41, a speech W4, a time period T42, and translation output R42 that are illustrated in FIG. 8 are similar to the time period T21, the speech W2, the time period T22, and the translation output R2 that have been described with reference to FIG. 5. Accordingly, repeated description thereof will be omitted.

In the example illustrated in FIG. 8, the speaker-side terminal 1 outputs a result of translation done by the translation process unit 102. In the example illustrated in FIG. 8, the speaker-side terminal 1 performs translation output R43 by voice during the time period T43 that is a time period corresponding to the time period T42 (for example, the time period T43 is the same time period as the time period T42). In accordance with such a configuration, it is possible for the speaker U1 to recognize a situation of the translation output to the listener U2 and recognize how the translation output has been actually performed.

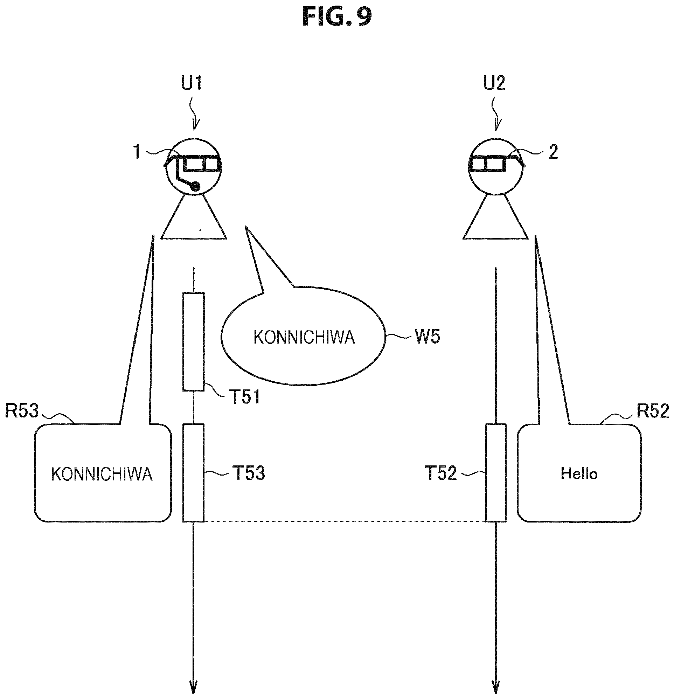

Note that, instead of the result of translation, it is also possible to output a result of retranslation to a language used by the speaker. FIG. 9 is an explanatory diagram illustrating an example in which a result of retranslation is output to a speaker. A time period T51, a speech W5, a time period T52, and translation output R52 that are illustrated in FIG. 9 are similar to the time period T21, the speech W2, the time period T22, and the translation output R2 that have been described with reference to FIG. 5. Accordingly, repeated description thereof will be omitted.

In the example illustrated in FIG. 9, the speaker-side terminal 1 outputs a result of retranslation in which a result of translation done by the translation process unit 102 is retranslated into a language used by the speaker. In the example illustrated in FIG. 9, the speaker-side terminal 1 performs translation output R53 by voice during a time period T53 that is a time period corresponding to the time period T52 (for example, the time period T53 is the same time period as the time period T52). Note that, the retranslation process may be performed by the translation process unit 102 described with reference to FIG 2, for example. In addition, instead of the result of retranslation, it is also possible to output voice obtained by collecting the speech W5.

### <4-2. Modified embodiment 2>

The example in which the embodiment of the present disclosure is applied to conversations between two users has been described above. However, the present technology is not limited thereto. For example, the present technology may be applied to a case of three or more users using different languages. In addition, the number of languages used by users may be three or more. In this case, situations of translation output related to respective devices (respective users) may vary in accordance with translation destination languages, processing performances of respective user terminals, or the like, for example. In addition, the situations of translation output related to respective devices may vary also in the case where translation processes for respective translation destination languages are performed in turns.

Accordingly, for example, it is also possible for the acquisition unit 104 to acquire situation information (for example, information regarding situations related to translation output) from a plurality of other devices (for example, listener-side terminals 2) that perform translation output. In addition, the notification information generation unit 105 may generate notification information for each of the other devices on the basis of situation information.

In addition, it is possible for the output control unit 106 to cause notifications to be output on the basis of a situation of output related to one of the plurality of other devices (for example, a device having the latest ending time regarding translation output), or cause a notification to be output for each of the other devices on the basis of situations of output related to the respective devices.

In the case where the output control unit 106 causes a notification to be output for each of the other devices on the basis of the situations of output related to the respective devices, for example, the output control unit 106 may cause voice to be output by distinguishing notifications related to the respective devices (respective listeners) in accordance with voice output directions while using a 3D sound output technology.

In addition, it is also possible for the output control unit 106 to cause sound to be output by distinguishing notifications related to the respective devices (respective listeners) while using sound presentation patterns or sound pitches. For example, the sound presentation patterns may be the length of alert sound, the number of times, or combinations thereof. For example, a sound presentation pattern "pi-pi-pi", a sound presentation pattern "pea-pi-pi", a sound presentation pattern "pea-pea-pea", or the like may be output such that they are distinguished from each other. In addition, it is also possible to output sound such that notifications related to the respective devices are distinguished from each other, by combining the above-described 3D sound output technology in addition to the sound presentation patterns or sound pitches.

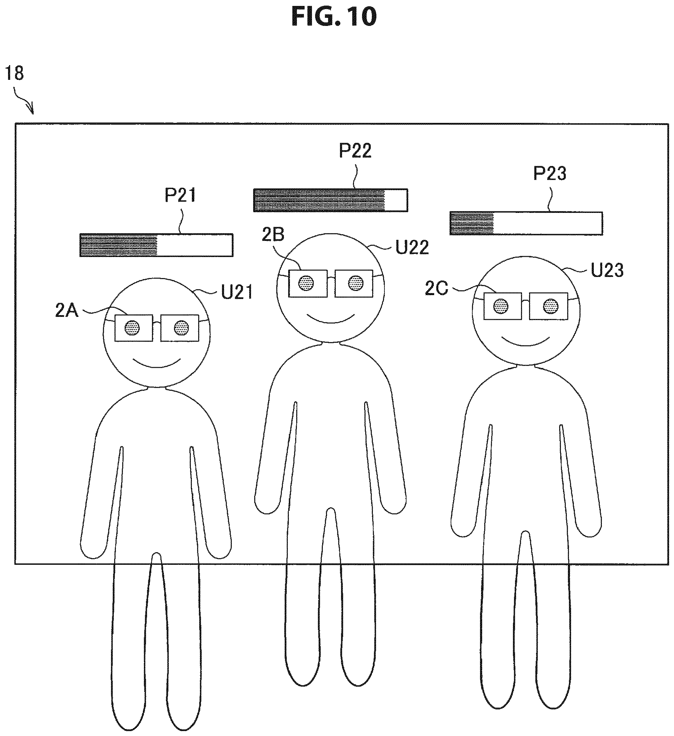

In addition, in the case where the output unit 18 is a see-through display (an optical see-through display, a video see-through display, or the like), the output control unit 106 may perform display output while distinguishing notifications related to the respective devices by using an augmented reality (AR) technology. FIG. 10 is an explanatory diagram illustrating the display output using the AR technology.

A user (speaker) of the speaker-side terminal 1 visually recognizes listeners U21 to U23 illustrated in FIG. 10 as real objects through the output unit 18 serving as a see-through display. In addition, as illustrated in FIG. 10, the listeners U21 to U23 have the listener-side terminals 2A to 2C, respectively.

In the example illustrated in FIG. 10, the output unit 18 displays progress bars P21 to P23 at respective positions (such as positions above heads) corresponding to the listeners U21 to U23 who are users of the respective listener-side terminals 2A to 2C. The progress bars P21 to P23 indicate progression rates of translation output related to the respective listener-side terminals 2A to 2C. Note that, in the case where the output control unit 106 outputs a notification on the basis of a situation of output related to one of the plurality of other devices (for example, a device having the latest ending time regarding translation output), the output unit 18 may display one progress bar.

In accordance with such a configuration, it is possible to encourage smoother conversations even in the case of there or more users.

### <4-3. Modified embodiment 3>

In addition, the notification information generation unit 105 may generate notification information further on the basis of contents of translation output. Hereinafter, some examples of generating notification information on the basis of contents of translation output and outputting a notification will be described. Note that, for example, the contents of translation output to be described below may be analyzed through a process based on contents of a result of translation, contents of a speech text before translation, or a process based on speech voice.

### (Notification based on determination of repetition of same content)

For example, the speaker-side terminal 1 may determine whether a content of translation output is repetition of a content of past translation output, and the notification information generation unit 105 may generate notification information in accordance with a result of the determination. For example, in the case where the content of translation output is not repetition, the output unit 18 outputs a result of translation. In the case where the content of translation output is repetition, notification information may be generated such that the output unit 18 outputs alert sound.

Note that, whether or not a content of translation output is repetition may be determined by comparing results of translation, or by comparing speech contents.

### (Notification based on length of content)

In addition, the notification information generation unit 105 of the speaker-side terminal 1 may generate notification information such that a notification varies in accordance with an amount of contents of translation output (for example, an amount of translation result texts). For example, in the case where the amount of contents of translation output is larger than a predetermined threshold, notification information may be generated such that a notification indicating remaining time that has been described with reference to FIG. 5, or a notification indicating a progression rate that has been described with reference to FIG. 6 and FIG. 7 is output. Alternatively, in the case where the amount of contents of translation output is less than a predetermined threshold, notification information may be generated such that a notification indicating the end of the translation output is output.

In accordance with such a configuration, detailed notifications are output in the case of performing translation output over a longer time period. Accordingly, a user does not have to wait over a long time period without knowing a situation of the translation output. In addition, in accordance with such a configuration, a simpler notification is output in the case where translation output is performed over a shorter time period. Accordingly, the user is not likely to feel that the notification is bothersome.

### (Notification based on semantic analysis of content)

In addition, the notification information generation unit 105 may generate notification information further on the basis of analysis of contents of translation output. For example, in the case where a content of translation output is a question sentence, it is necessary to wait for a response from a listener. Therefore, notification information may be generated such that alert sound (notification) is output at substantially the same timing as the end of translation output. Alternatively, in the case where the content of translation output is a content spoken by a speaker in a unilateral way, notification information may be generated such that alert sound is output a predetermined time earlier than the end of translation output. This prompts the speaker to move the conversation forward.

In addition, the notification information generation unit 105 may generate notification information on the basis of an important part detected from contents of translation output. For example, notification information may be generated such that alert sound (notification) is output at the time of completion of output of all parts detected as the important parts from among the contents of translation output.

Next, an example of a method of detecting important parts from contents of translation output will be descried. Note that, the process of detecting the important parts from contents of translation output (to be described later) may be performed by the control unit 10 of the speaker-side terminal 1, or may be performed by another device.

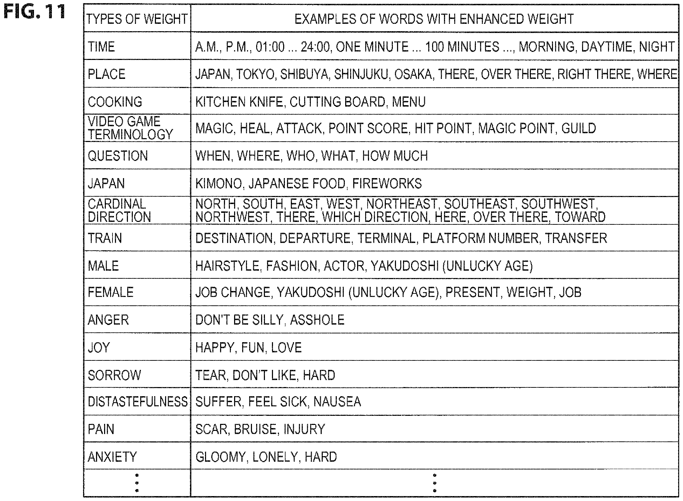

For example, a word may be detected as the important part in the case where weight of the word belonging to a predetermined type is enhanced under a predetermined condition and the word with enhanced weight is included in a speech text or a translation result text. FIG. 11 is a table showing an example of types of weight and words with enhanced weight.

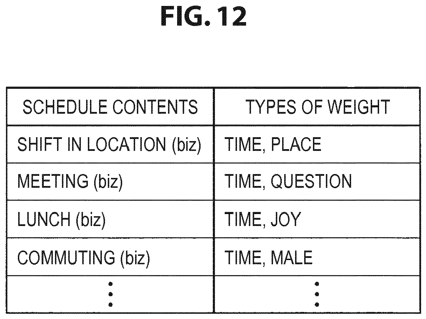

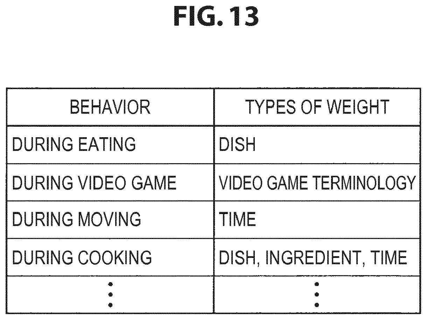

For example, the weight of the word may be set in accordance with context information of a user (such as schedule contents, behavior, place, who the user is, types of using applications, or the like). FIG. 12 is a table showing types of weight enhanced in accordance with schedule contents. In addition, FIG. 13 is a table showing types of weight enhanced in accordance with behavior. In addition, in the case where a map application is activated in the speaker-side terminal 1, weight of words belonging to a type such as "time", "place", or "cardinal direction" may be enhanced. Note that, the context information of the user may be recognized on the basis of user input, or may be recognized on the basis of information acquired by the sensor unit 16 or the like.

In addition, the weight of the word may be set on the basis of sound information, or may be set on the basis of sound pressure, frequency, pitch (sound pitch), speaking speed, the number of moras, an accent position, or the like. For example, in the case where the sound pressure is a predetermined threshold (such as 72 db) or more, weight of words belonging to types such as "anger" or "joy" may be enhanced. In addition, in the case where the sound pressure is a predetermined threshold (such as 54 db) or less, weight of words belonging to types such as "sorrow", "distastefulness", "pain", or "anxiety" may be enhanced. In addition, emotion such as "anger", "joy", or "sorrow" may be estimated on the basis of the number of moras, an accent position, or the like, and thereby weight of words belonging to such types of emotion may be enhanced.

In addition, weight of words may be set on the basis of speech or contents of translation output. For example, weight may be enhanced in accordance with parts of speech included in a speech text or a translation result text. For example, in the case where a translation destination language is Japanese, weight of verbs may be enhanced. In the case where a translation destination language is English, weight of nouns may be enhanced.

In accordance with such a configuration, it is possible for the speaker to recognize a situation related to translation output regarding important parts. This enables smoother conversations.

### <4-4. Modified embodiment 4>

In addition, the notification information generation unit 105 may generate notification information further on the basis of user information of a speaker related to translation output. For example, notification information may be generated on the basis of tendencies of past speeches from the speaker. Alternatively, the notification information may be generated such that a notification is output on the basis of an average value of time related to translation output of the past speeches.

### <4-5. Modified embodiment 5>

Note that, the example in which both the speaker and the listener have the terminals has been described above. However, the present technology is not limited thereto. For example, the present technology may be applied to a case where a speaker does not have a terminal (a case where only the listener has the terminal). Next, a configuration example of a listener-side terminal in the case where a speaker does not have a terminal will be described.

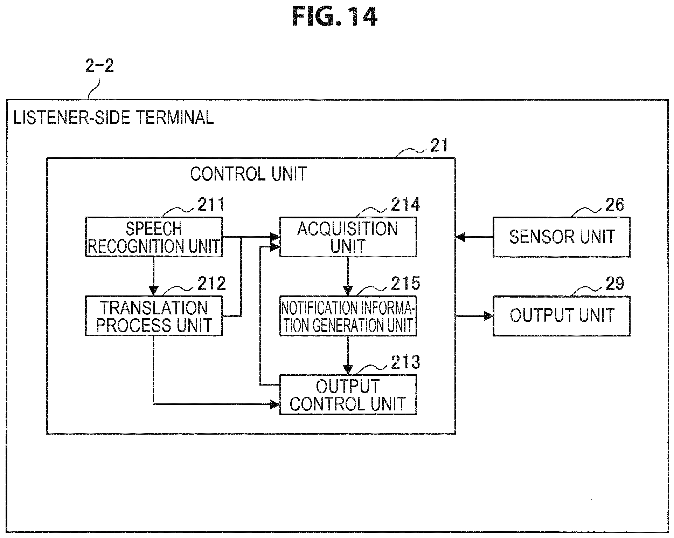

FIG. 14 is a block diagram illustrating a configuration example of a listener-side terminal 2-2 in the case where a speaker does not have a terminal. As illustrated in FIG. 14, the listener-side terminal 2-2 is an information processing device including a control unit 21, a sensor unit 26, and an output unit 29.

The control unit 21 controls respective structural elements of the listener-side terminal 2-2. In addition, as illustrated in FIG. 14, the control unit 21 also functions as a speech recognition unit 211, a translation process unit 212, an output control unit 213, an acquisition unit 214, and a notification information generation unit 215.

Among the above listed structural elements, configurations of the speech recognition unit 211, the translation process unit 212, the acquisition unit 214, the notification information generation unit 215, the sensor unit 26, and the output unit 28 are similar to the configurations of the speech recognition unit 101, the translation process unit 102, the acquisition unit 104, the notification information generation unit 105, the sensor unit 16, and the output unit 18 that have been described with reference to FIG. 2. Accordingly, repeated description thereof will be omitted.

In addition, the output control unit 213 illustrated in FIG. 14 has the functions related to notification output performed by the output control unit 106 described with reference to FIG. 2, and the functions related to translation output performed by the output control unit 202 described with reference to FIG. 3. For example, the output control unit 213 may control the output unit 29 such that the output unit 29 outputs notifications through light emission, alert sound output, or the like.

In accordance with such a configuration, it is possible for the listener-side terminal 2-2 to output translations and notifications such that a speaker can recognize a translation situation even in the case where only a listener has the terminal.

### <<5. Hardware configuration example>>

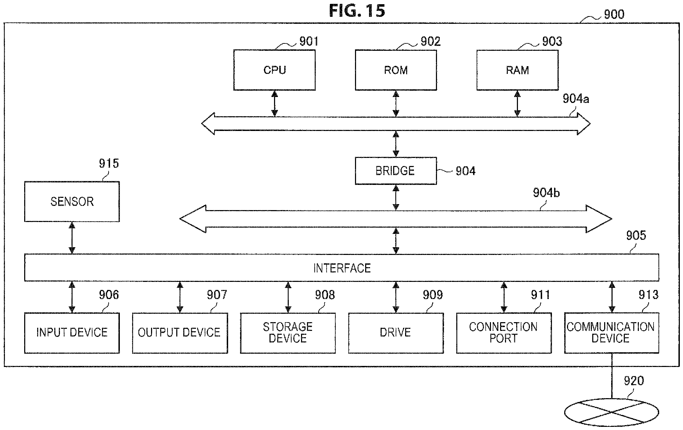

The embodiments of the present disclosure have been described above. Last of all, with reference to FIG. 15, a hardware configuration of the information processing device according to the present embodiment will be described. FIG. 15 is a block diagram illustrating an example of a hardware configuration of an information processing device according to the present embodiment. Note that, for example, an information processing device 900 illustrated in FIG. 15 may be implemented as the speaker-side terminal 1, the listener-side terminal 2, or the listener-side terminal 2-2 illustrated in FIG.2, FIG. 3, and FIG. 14, respectively. The information processing performed by the speaker-side terminal 1, the listener-side terminal 2, or the listener-side terminal 2-2 according to the present embodiment is achieved by cooperation of software and hardware described below.

As illustrated in FIG. 15, the information processing device 900 includes a central processing unit (CPU) 901, read only memory (ROM) 902, random access memory (RAM) 903, and a host bus 904a. In addition, the information processing device 900 includes a bridge 904, an external bus 904b, an interface 905, an input device 906, an output device 907, a storage device 908, a drive 909, a connection port 911, a communication device 913, and a sensor 915. The information processing device 900 may include a processing circuit such as a DSP or an ASIC instead of or in addition to the CPU 901.

The CPU 901 functions as an arithmetic processing device and a control device to control all of the operating processes in the information processing device 900 in accordance with various kinds of programs. In addition, the CPU 901 may be a microprocessor. The ROM 902 stores programs, operation parameters, and the like used by the CPU 901. The RAM 903 transiently stores programs used when the CPU 901 is executed, and various parameters and the like that change as appropriate when executing such programs. The CPU 901 may be configured as, for example, the control unit 10 illustrated in FIG. 2, the control unit 20 illustrated in FIG. 3, and the control unit 21 illustrated in FIG. 14.

The CPU 901, the ROM 902, and the RAM 903 are connected to each other through the host bus 904a including a CPU bus or the like. The host bus 904a is connected, via the bridge 904, to the external bus 904b such as a peripheral component interconnect/interface (PCI) bus. Note that, the host bus 904a, the bridge 904, and the external bus 904b are not necessarily configured as a separate component, but their functions may be incorporated into in a single bus.

The input device 906 is implemented as a device allowing the user to input information, such as a mouse, a keyboard, a touchscreen, a button, a microphone, a switch, or a lever, for example. In addition, the input device 906 may be a remote control device using infrared ray or other electric waves, or may be external connection equipment, such as a mobile phone or a PDA operable in response to operation of the information processing device 900, for example. Furthermore, the input device 906 may include an input control circuit or the like that is configured to generate an input signal on the basis of information input by a user using the aforementioned input means and to output the generated input signal to the CPU 901. The user of the information processing device 900 is capable of inputting various types of data to the information processing device 900, or instructing the information processing device 900 to perform a processing operation, by operating the input device 906.

The output device 907 is configured as a device capable of visually or audibly notifying a user of the acquired information. Examples of such a device include a display device such as a CRT display device, a liquid crystal display device, a plasma display device, an EL display device, or a lamp, a sound output device such as a loudspeaker or a headphone, a printer device, and the like. The output device 907 outputs, for example, results acquired by various processes performed by the information processing device 900. Specifically, the display device visually displays results acquired by various processes performed by the information processing device 900 in various formats such as texts, images, tables, and graphs. On the other hand, the sound output device converts audio signals including reproduced sound data, audio data, and the like into analog signals and audibly outputs the analog signals. The display device may be configured as, for example, the output unit 18 illustrated in FIG. 2, the output unit 28 illustrated in FIG. 3, and the output unit 29 illustrated in FIG. 14.

The storage device 908 is a device for data storage configured as an example of a storage unit of the information processing device 900. For example, the storage device 908 is implemented as a magnetic storage device such as an HDD, a semiconductor storage device, an optical storage device, a magneto-optical storage device, or the like. The storage device 908 may include a storage medium, a recording device for recording data on the storage medium, a reading device for reading data from the storage medium, a deletion device for deleting data recorded on the storage medium, and the like. The storage device 908 stores programs and various types of data executed by the CPU 901, various types of data acquired from the outside, and the like.

The drive 909 is a reader/writer for the recording medium, and is incorporated in or externally attached to the information processing device 900. The drive 909 reads information recorded on a mounted removable recording medium such as a magnetic disk, an optical disc, a magneto-optical disk, or semiconductor memory, and outputs the information to the RAM 903. In addition, the drive 909 is also capable of writing information to the removable storage medium.

The connection port 911 is an interface for connection to external equipment, and is, for example, a connection port for connection to the external equipment that can transmit data via a USB (Universal Serial Bus), for example.

The communication device 913 is, for example, a communication interface configured as a communication device or the like for connection with a network 920. The communication device 913 is, for example, a communication card or the like for a wired or wireless local area network (LAN), long term evolution (LTE), Bluetooth (registered trademark), or wireless USB (WUSB). In addition, the communication device 913 may be a router for optical communication, a router for asymmetric digital subscriber line (ADSL), various communication modems, or the like. For example, the communication device 913 is capable of transmitting and receiving signals and the like to and from the Internet or other communication equipment, for example, in accordance with a predetermined protocol such as TCP/IP or the like. The communication device 913 may be configured as, for example, the communication unit 14 illustrated in FIG. 2 and the communication unit 24 illustrated in FIG. 3.

Note that, the network 920 is a wired or wireless communication channel through which information is transmitted from devices connected with the network 920. For example, the network 920 may include a public network such as the Internet, a telephone network, and a satellite communication network, various local area networks (LANs) including Ethernet (registered trademark), a wide area network (WAN), and the like. In addition, the network 920 may include a dedicated network such as an internet protocol-virtual private network (IP-VPN).

The sensor 915 is various sensors such as an acceleration sensor, a gyro sensor, a geomagnetic sensor, an optical sensor, a sound sensor, a ranging sensor, and a force sensor, for example. The sensor 915 acquires information relating to states of the information processing device 900 itself such as an attitude or moving speed of the information processing device 900, and acquires information relating to an environment around the information processing device 900 such as brightness and noise around the information processing device 900. In addition, the sensor 915 may include a GPS sensor for receiving a GPS signal and measuring the latitude, longitude, and altitude of the device.

The example of the hardware configuration capable of implementing the functions of the information processing device 900 according to the present embodiment has been described above. The respective structural elements described above may be implemented using universal members, or may be implemented by hardware dedicated to the functions of the respective structural elements. Accordingly, it is possible to change a hardware configuration to be used appropriately depending on the technical level at each time of carrying out the embodiments.

Note that, it is possible to create a computer program for implementing each of the functions of the information processing device 900 according to the present embodiment and mount them in a PC or the like. Furthermore, it is possible to provide a computer-readable recording medium on which such computer programs are stored. The recording medium is, for example, a magnetic disc, an optical disc, a magneto-optical disc, a flash memory, or the like. The computer program may be distributed, for example, through a network without using the recording medium.

### <<6. Conclusion>>

As described above, according to the embodiments of the present disclosure, it is possible to encourage smoother conversations.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, the example in which the present technology is applied to conversations has been described above according to the above-described embodiments. However, the present technology is not limited thereto. For example, the present technology can be applied to a lecture in which a single speaker speaks in front of a plurality of listeners (audience), in other words, a case of one-way speech.

In addition, it may not be necessary to chronologically execute respective steps according to the above described embodiment, in the order described in the sequence diagrams. For example, the respective steps in the processes according to the above described embodiment may be performed in the order different from the order described in the sequence diagrams, or may also be performed in parallel.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing device including:
   an acquisition unit configured to acquire situation information including information regarding a situation related to translation output; and
   a notification information generation unit configured to generate notification information on a basis of the situation information.
(2) The information processing device according to (1),
   in which the notification information includes information for issuing a notification of an end of the translation output.
(3) The information processing device according to (1) or (2),
   in which the notification information includes information indicating a progression rate.
(4) The information processing device according to any one of (1) to (3),
   in which the situation information further includes information regarding a situation related to a translation process.
(5) The information processing device according to any one of (1) to (4),
   in which the situation information further includes information regarding a situation related to speech recognition.
(6) The information processing device according to any one of (1) to (5),
   in which the acquisition unit acquires the situation information from another device that performs the translation output.
(7) The information processing device according to (6), in which
   the acquisition unit acquires the situation information from a plurality of other devices that perform the translation output, and
   the notification information generation unit generates the notification information for each of the plurality of other devices on a basis of the situation information.
(8) The information processing device according to any one of (1) to (7),
   in which the notification information generation unit generates the notification information further on a basis of a content of the translation output.
(9) The information processing device according to any one of (1) to (8),
   in which the notification information generation unit generates the notification information further on a basis of user information regarding a speaker related to the translation output.
(10) The information processing device according to any one of (1) to (9), further including
   an output control unit configured to cause a notification to be output on a basis of the notification information.
(11) The information processing device according to (10),
   in which the output control unit causes the notification to be output, the notification indicating an end of the translation output.
(12) The information processing device according to (10) or (11),
   in which the output control unit causes the notification to be output, the notification indicating remaining time before the translation output ends.
(13) The information processing device according to any one of (10) to (12),
   in which the output control unit causes the notification to be output, the notification indicating a progression rate.
(14) An information processing system including:
   an acquisition unit configured to acquire situation information including information regarding a situation related to translation output; and
   a notification information generation unit configured to generate notification information on a basis of the situation information.
(15) A program causing a computer to achieve:
   a function of acquiring situation information including information regarding a situation related to translation output; and
   a function of generating notification information on a basis of the situation information.

### Reference Signs List

- 1: speaker-side terminal
- 2: listener-side terminal
- 10: control unit
- 14: communication unit
- 16: sensor unit
- 18: output unit
- 20: control unit
- 24: communication unit
- 26: sensor unit
- 28: output unit
- 101: speech recognition unit
- 102: translation process unit
- 103: communication control unit
- 104: acquisition unit
- 105: notification information generation unit
- 106: output control unit
- 201: communication control unit
- 202: output control unit

## Claims

1. An information processing device comprising:
an acquisition unit configured to acquire situation information including information regarding a situation related to translation output; and
a notification information generation unit configured to generate notification information on a basis of the situation information.

2. The information processing device according to claim 1,
wherein the notification information includes information for issuing a notification of an end of the translation output.

3. The information processing device according to claim 1,
wherein the notification information includes information indicating a progression rate.

4. The information processing device according to claim 1, wherein the situation information further includes information regarding a situation related to a translation process.

5. The information processing device according to claim 1,
wherein the situation information further includes information regarding a situation related to speech recognition.

6. The information processing device according to claim 1,
wherein the acquisition unit acquires the situation information from another device that performs the translation output.

7. The information processing device according to claim 6, wherein
the acquisition unit acquires the situation information from a plurality of other devices that perform the translation output, and
the notification information generation unit generates the notification information for each of the plurality of other devices on a basis of the situation information.

8. The information processing device according to claim 1,
wherein the notification information generation unit generates the notification information further on a basis of a content of the translation output.

9. The information processing device according to claim 1,
wherein the notification information generation unit generates the notification information further on a basis of user information regarding a speaker related to the translation output.

10. The information processing device according to claim 1, further comprising
an output control unit configured to cause a notification to be output on a basis of the notification information.

11. The information processing device according to claim 10,
wherein the output control unit causes the notification to be output, the notification indicating an end of the translation output.

12. The information processing device according to claim 10,
wherein the output control unit causes the notification to be output, the notification indicating remaining time before the translation output ends.

13. The information processing device according to claim 10,
wherein the output control unit causes the notification to be output, the notification indicating a progression rate.

14. An information processing system comprising:
an acquisition unit configured to acquire situation information including information regarding a situation related to translation output; and
a notification information generation unit configured to generate notification information on a basis of the situation information.

15. A program causing a computer to achieve:
a function of acquiring situation information including information regarding a situation related to translation output; and
a function of generating notification information on a basis of the situation information.
